(19)

Europäisches
Patentamt
European
Patent Office
Office européen
des brevets

(11)  **EP 4 365 046 A1**

(12)  # EUROPEAN PATENT APPLICATION
published in accordance with Art. 153(4) EPC

(43) Date of publication:
**08.05.2024 Bulletin 2024/19**

(21) Application number: **23829362.5**

(22) Date of filing: **17.01.2023**

(51) International Patent Classification (IPC):
**B60W 30/095** (2012.01)  **G08G 1/00** (2006.01)

(86) International application number:
**PCT/CN2023/072689**

(87) International publication number:
**WO 2024/001169 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 CN 202210771279**

(71) Applicant: **Chongqing Changan Automobile Co.,
Ltd.**
**Chongqing 400023 (CN)**

(72) Inventor: **DING, Minghui**
**Chongqing 400023 (CN)**

(74) Representative: **Schulz Junghans
Patentanwälte PartGmbB
Großbeerenstraße 71
10963 Berlin (DE)**

(54)  **PEDESTRIAN MINOR-COLLISION IDENTIFICATION METHOD AND SYSTEM IN LOW-SPEED SCENARIO**

(57)     Disclosed is a pedestrian micro-collision recognition method and system in a low-speed scene, which includes: acquiring a collision signal sensing source, including: 1) calculating a FreeSpace point collision probability, 2) calculating a pedestrian target collision probability, and 3) calculating collision probabilities of acceleration sensors; comprehensively determining whether a collision of a pedestrian outside a vehicle currently occurs through a collision recognition system based on a signal of the sensing source; and if no collision occurs, the system operating normally; when the collision is detected in a corresponding region, the system needing to adopt a respective collision response strategy. Based on an existing acceleration sensor of a vehicle, a problem that a traditional collision sensor is difficult to recognize a pedestrian micro-collision in a low-speed driving scene of the vehicle and accurately recognize collisions of adults, children, pets, and the like under a low-speed condition is effectively solved through strategy development of the rear end, so that the vehicle can immediately recognize the micro-collision after the collision, and take a respective system strategy at the vehicle to avoid secondary rolling of collided pedestrians or animals outside the vehicle.

Fig. 2

## Description

### Field of the Invention

The present disclosure relates to an intelligent driving assistance technology, and in particular, to a pedestrian micro-collision recognition method and system in a low-speed scene.

### Background of the Invention

A remote valet parking automatic parking assist (APA) system adopts a multi-sensor (ultrasonic, millimeter wave, camera, laser radar, etc.) fusion detection technology to realize L4 unmanned functions in a limited region, such as the last kilometer valet parking, remote valet parking, remote moving, and one-touch calling. A use scene of the remote valet parking APA system is non-public roads of ground or underground parking lots, and its working speed range is 0-15 Km/h. Since the remote valet parking APA system is positioned at L4, that is, there is no driver in a vehicle and no remote supervision by a user, an "observation" ability of the system in the working process completely depends on the detection of sensors. Because of limitations of physical factors and environmental factors, the sensor's perception ability is quite different from that of human beings, making it difficult for the sensor to recognize pedestrians in individual scenes. Thus, it is easy to cause collisions by failing to recognize the pedestrian.

The first international technical standard ISO22737 for a specific L4 automatic driving system proposes clear requirements for a protection on a pedestrian outside a vehicle during low-speed automatic driving (LSAD) on predefined routes with running speeds below 32 km/h, including collision avoidance of the pedestrian outside the vehicle, testing, and interaction with dispatchers after a danger has occurred. Therefore, it is of great significance to recognize collisions of the pedestrian outside the vehicle, perform emergency stops, record collision data, and interact with dispatchers for the protection on the pedestrian outside the vehicle.

In current mass-produced vehicles, when the speed of this vehicle is above 25 KM/h, an acceleration sensor or a pressure tube sensor is adopted to recognize pedestrian collision. However, due to physical structures, installation positions, and detection principle limitations of the acceleration sensor and the pressure tube sensor, it is difficult to recognize pedestrian collision at speeds below 25 KM/h, pedestrian collision behind the vehicle, and pedestrian scratches on both sides of the vehicle. Through a real vehicle test, when the speed range is 0-15 Km/h, an accuracy of recognizing the pedestrian micro-collision using only the acceleration sensor is about 50-75%. In a low-speed scene, the pedestrian's body is soft (non-rigid collision) due to the low speed, and an injury caused by the collision itself is not large. However, it is difficult to detect and recognize the micro-collision by adopting an original collision recognition strategy, so it is easy to bring a risk of secondary rolling. In the low-speed scene, an injury caused by the secondary rolling is far more serious than the collision itself.

For an importance of pedestrian collision recognition in the low-speed scene, those skilled in the art have studied a pedestrian collision detection apparatus/sensor. For example, "VEHICLE BUMPER STRUCTURE WITH PEDESTRIAN COLLISION DETECTION SENSOR" (the applicant is Toyota Motor Corporation) disclosed in CN201580007859.8 provides a vehicle bumper structure capable of detecting a collision with a colliding body at a corner portion of a vehicle based on a collision detection sensor. "PEDESTRIAN COLLISION PROTECTION TRIGGER APPARATUS, PEDESTRIAN COLLISION PROTECTION APPARATUS AND VEHICLE" disclosed in CN201822036612.2 (the applicants are Zhejiang Geely Automobile Research Institute Corporation and Zhejiang Geely Holding Group Corporation) provides a pedestrian collision protection trigger apparatus including a mounting bracket and a plurality of sensors. The plurality of sensors are provided on the mounting bracket at intervals. The mounting bracket is fixedly connected to a front cross beam, and the mounting bracket is located between a front bumper and the front cross beam. The mounting bracket is a deformable structure. The sensors are angle sensors or acceleration sensors, which can effectively recognize the pedestrian collision. The above technique has a problem of high cost due to a need to rearrange or replace the hardware. In addition, "METHOD FOR CALCULATING VEHICLE-PEDESTRIAN COLLISION RISK DOMAIN AND SAFETY EVALUATION SYSTEM" (the applicant is Tsinghua University) disclosed in CN202010344141.0 determines whether a pedestrian notices a vehicle by detecting and outputting vehicle information and pedestrian information. A collision risk domain between the vehicle and the pedestrian is determined according to an assumed result of whether the pedestrian takes an active avoidance action and whether the vehicle takes an immediate reaction action, and the safety of the pedestrian and the driving comfort of the vehicle during an interaction between the vehicle and the pedestrian may be effectively improved. However, the detection and reasonable prediction of a behavior of a target are only performed before the collision occurs, but the detection of the pedestrian collision is not completed.

### Summary of the Invention

In view of the above-mentioned deficiencies of the prior art, it is an object of the present disclosure to provide a pedestrian micro-collision recognition method and system in a low-speed scene, which solves a problem that an existing collision sensor (an acceleration sensor, a pressure tube sensor) is difficult to recognize a pedestrian micro-collision in a low-speed driving scene of the vehicle and cannot avoid the secondary rolling of collided pedestrians or animals outside the vehicle in time.

In order to achieve the above object, the present disclosure adopts the following technical solutions:
a pedestrian micro-collision recognition method in a low-speed scene, including the steps of:

S 1, acquiring a collision signal sensing source, including: 1) calculating a FreeSpace point collision probability; 2) calculating a pedestrian target collision probability; and 3) calculating collision probabilities of acceleration sensors;

S2, comprehensively determining whether a collision of a pedestrian outside a vehicle currently occurs through a collision recognition system based on a signal of the sensing source; and

S3, if no collision occurs, the system operating normally; when the collision is detected in a corresponding region, the system needing to adopt a respective collision response strategy.

Further, in S 1, the calculating a FreeSpace point collision probability is the FreeSpace points detected based on vehicle exterior sensors (a front view camera, a peripheral view camera, a surround-view camera, a forward millimeter wave radar, an angular millimeter wave radar, an ultrasonic radar, a laser radar, etc.). The surround-view camera and the ultrasonic radar are necessary sensors for the implementation of the present disclosure, and presences of other sensors may make a detection result more reliable.

Each FreeSpace point obtained by a multi-sensor information fusion has its own corresponding FreeSpace collision risk degree (FSCOllision), and an attribute value of the FSCOllision will be initialized to 0 when the FreeSpace point is generated; the FSCOllision being 0 represents there is no collision risk, and 1 represents there is a collision risk; and at the same time, the FSCOllision of three consecutive FreeSpace points being 1 represents that there is a collision risk, and a signal is outputted: the FreeSpace point collision probability being 1 represents a high probability, and a FreeSpace point collision region is a corresponding existence region of a FreeSpace point with the collision risk.

Further, in S2, an output signal, for comprehensively determining whether a collision occurs, includes: a fused micro-collision detection state, taking a value of 0 representing there is no collision and 1 representing there is a collision; a collision probability of the fused target, taking a value range of 0-100%; and a fused micro-collision region, taking a value of 1 representing non-collision, 2 representing a front collision area, 3 representing a rear collision area, 4 representing a left collision area, and 5 representing a right collision area.

Further, in S3, the collision response strategy is outputted as the fused micro-collision detection state of 1 representing there is a collision; and the fused micro-collision region being a specific collision region. The system collision response strategy in S3 is that when the fused micro-collision detection state of 1 represents there is a collision, namely, it is determined that the vehicle collides with a pedestrian target outside the vehicle.

The present disclosure also provides a pedestrian micro-collision recognition system in a low-speed scene, including vehicle exterior sensors, an acceleration sensor, and a processor, and the processor performs the above-mentioned pedestrian micro-collision recognition method in a low-speed scene.

Compared to the prior art, the present disclosure has the following advantageous effects.

1. Based on an existing acceleration sensor of a vehicle, a problem that a traditional collision sensor (an acceleration sensor, a pressure tube sensor) is difficult to recognize a pedestrian micro-collision in a low-speed driving scene of the vehicle and accurately recognize collisions of adults, children, pets, and the like under a low-speed condition is effectively solved by the present disclosure through strategy development of the rear end, so that the vehicle can immediately recognize the micro-collision after the collision, and take a respective system strategy at the vehicle end to avoid secondary rolling of collided pedestrians or animals outside the vehicle, ensuring the safety of life outside the vehicle. The system specifically relates to a rapid recognition strategy after a micro-collision occurs between this vehicle and the pedestrian outside the vehicle (including a child with a height above 80 cm and a weight above 10 Kg) during low-speed driving and reversing, and the system may effectively avoid secondary rolling after the pedestrian being collided.

2. Without adding other sensors and other hardware facilities, the present disclosure effectively solves the recognition of the micro-collision between the front collision area, the rear collision area, the left collision area, and the right collision area of the vehicle and the pedestrian in the low-speed driving scene, avoids the secondary rolling of the pedestrian, and effectively ensures the life safety of the pedestrian outside the vehicle; and a cost is greatly saved, and hardware development and matching time is reduced.

3. The present disclosure effectively solves the problem of an installation position of a conventional collision sensor, which results in those pedestrian micro-collisions in the front, rear, left, and right sides of the vehicle cannot be recognized in an all-round manner, improving a safety guarding ability of the vehicle.

## Brief Description of the Drawings

Fig. 1 is a schematic diagram of a pedestrian micro-collision recognition guardian range in a low-speed scene;

Fig. 2 is a flowchart of a pedestrian collision recognition system in a low-speed scene according to the present disclosure;

Fig. 3 is a flowchart of FSCOllision in a low-speed scene according to the present disclosure;

Fig. 4 is a flowchart of a FreeSpace point collision probability in a low-speed scene according to the present disclosure;

Fig. 5 is a flowchart of a target collision risk degree in a low-speed scene according to the present disclosure; and

Fig. 6 is a flowchart of a pedestrian target collision probability in a low-speed scene according to the present disclosure.

## Detailed Description of the Embodiments

In order to enable those skilled in the art to better understand the technical solutions of the present disclosure, the present disclosure is further described in detail below in conjunction with specific embodiments and drawings, but embodiments of the present disclosure are not limited thereto.

In the present disclosure, parameters and signals involved have the following physical meanings.

Table 1 Process parameter of pedestrian micro-collision recognition system in low-speed scene

| Parameter name | Physical meaning | Preset value (unit) |
|---|---|---|
| K _Pflogcollision | Maximum value of longitudinal distance of pedestrian collision region | 3 m in front of front bumper and 3 m behind rear bumper of this vehicle |
| K_Phorlision | Absolute value of horizontal distance of pedestrian collision region | Range of 2 meters to the left and right of an outer edge of this vehicle |
| K_Ahorlision | Threshold of pedestrian collision acceleration | -5 m/s2 |
| K_a | Weight of FreeSpace point collision probability | 0.5 |
| K_b | Weight of pedestrian target collision probability | 0.2 |
| K_c | Weight of collision probability of acceleration sensor | 0.3 |
| K_Cp | Collision threshold line | 50% |

Table 2 Output signal of pedestrian micro-collision recognition system in low-speed scene

| Module | Signal name | Value |
|---|---|---|
| Calculating FreeSpace point collision probability | FSCOllision | 0: no collision risk; 1: collision risk; |
| | FreeSpace point collision region | 1: non-collision; 2: front collision area; 3: rear collision area; 4: left collision area; 5: right collision area |
| | FreeSpace point collision probability | 0: no collision; 1: high probability |
| Calculating | Pedestrian target collision | Level 0-10 |
| pedestrian target collision probability | risk area | |
| | Pedestrian target collision region | 1: non-collision; 2: front collision area; 3: rear collision area; 4: left collision area; 5: right collision area |
| | Pedestrian target collision probability | 0: no collision; 1: medium probability; 2: high probability |
| Calculating collision probabilities of acceleration sensors | Collision probabilities of acceleration sensors | 1: low probability; 2: medium probability; 3: high probability |
| Final output signal of present disclosure | Fused micro-collision detection state | 0: no collision; 1: collision |
| | Collision probability of fused target | Percentage |
| | Fused micro-collision region | 1: non-collision; 2: front collision area; 3: rear collision area; 4: left collision area; 5: right collision area |

Table 3 Comparison table of Chinese and English in the present disclosure

| English | Chinese |
|---|---|
| FreeSpce | 可通行区域 |
| FSCOllision | 可通行区域碰撞风险度 |
| Collision | 行人目标碰撞风险度 |

Table 1 shows the process parameters of the pedestrian micro-collision recognition system in a low-speed scene according to the present disclosure, in order to satisfy a better performance of the pedestrian micro-collision recognition system with different vehicle type configurations, the process parameters should be calibrated separately according to the real vehicle test data with different vehicle type configurations.

The process parameter assignment in the present disclosure is only a calibration value of the currently adapted vehicle type. The process parameters include: the maximum value of the longitudinal distance of the pedestrian collision region K_Pflogcollision, the absolute value of the horizontal distance of the pedestrian collision region K_Phorlision, the threshold of the pedestrian collision acceleration K_Ahorlision, the weight of the FreeSpace point collision probability K_a, the weight of the pedestrian target collision probability K_b, the weight of the collision probabilities of the acceleration sensors K_c, and the collision threshold line K_Cp.

Table 2 shows the pedestrian micro-collision recognition system in a low-speed scene according to the present disclosure, and its output signal includes that a module calculating the FreeSpace point collision probability outputs three signals, respectively being the FSCOllision, taking a value of 0 representing there is no collision risk and 1 representing there is a collision risk; the FreeSpace point collision region, taking a value of 1 representing the non-collision, 2 representing the front collision area, 3 representing the rear collision area, 4 representing the left collision area, and 5 representing the right collision area; and the FreeSpace point collision probability, taking a value of 0 representing there is no collision and 1 representing the high probability.

A module calculating the pedestrian target collision probability outputs three signals, respectively being a pedestrian target collision risk degree (COllision), taking a value range of 0-10; the pedestrian target collision probability, taking the value of 0 representing there is no collision, 1 representing the medium probability, and 2 representing the high probability; and the pedestrian target collision region, taking the value of 1 representing the non-collision, 2 representing the front collision area, 3 representing the rear collision area, 4 representing the left collision area, and 5 representing the right collision area.

A module calculating the collision probabilities of the acceleration sensors outputs one signal, being the collision probabilities of the acceleration sensors, taking the value of 1 representing the low probability, 2 representing the medium probability, and 3 representing the high probability.

The disclosure finally outputs three signals, respectively being the fused micro-collision detection state, taking the value of 0 representing there is no collision and 1 representing there is a collision; the collision probability of the fused target, taking a value range of 0-100%; and the fused micro-collision region, taking the value of 1 representing the non-collision, 2 representing the front collision area, 3 representing the rear collision area, 4 representing the left collision area, and 5 representing the right collision area.

A child refers to a person with a height above 90 cm and a weight above 10 Kg.

A pet refers to an animal with a weight above 5 Kg.

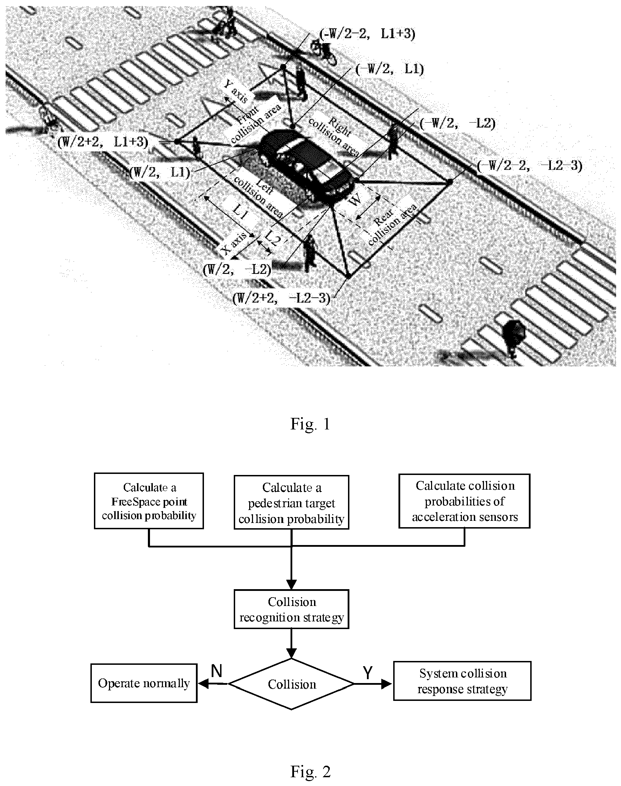

Referring to Fig. 1, a schematic diagram of a pedestrian collision recognition range in a low-speed scene includes four regions: the front collision area, the rear collision area, the left collision area, and the right collision area.

Establishment of a coordinate system of this vehicle: a center of a rear axis is a coordinate origin, which complies with a right-hand rule (the horizontal axis is X axis, the left is positive, and the right is negative; the longitudinal axis is Y axis, the front is positive, and the rear is negative, the vertical axis is Z axis, the top is positive, and the bottom is negative), a vehicle width is W, a distance between the center of the rear axis and the front bumper longitudinal direction is L1, and a distance between the center of the rear axis and the rear bumper longitudinal direction is L2. The front collision area refers to a T-shaped region in front of this vehicle in the coordinate system of this vehicle, and four corner points of the T-shaped region are (-W/2,L1), (W/2,L1), (W/2+2,L1+3), and (-W/2-2,L1+3). The rear collision area refers to a T-shaped area behind this vehicle in the coordinate system of this vehicle, and four corner points of the T-shaped region are (-W/2,-L2), (W/2,-L2), (W/2+2,-L2-3), and (-W/2-2,-L2-3). The left collision area refers to a T-shaped area on the left side of this vehicle in the coordinate system of this vehicle, and four corner points of the T-shaped region are (W/2,L1), (W/2,-L2), (W/2+2,-L2-3), and (W/2+2,L1+3). The right collision area refers to a T-shaped area on the right side of this vehicle in the coordinate system of this vehicle, and four corner points of the T-shaped region are (-W/2,L1), (-W/2,-L2), (-W/2-2,-L2-3), and (-W/2-2,L1+3). The collision recognition system adopts a fusion result of the surround-view and ultrasonic, and can effectively guard the range of 3 meters in front of the front bumper, 3 meters behind the rear bumper, and 2 meters to the left and right of an outer edge of this vehicle.

As shown in Fig. 2, a pedestrian micro-collision recognition method in a low-speed scene includes the following steps:

S1, acquiring a collision signal sensing source: 1) calculating the FreeSpace point collision probability; 2) calculating the pedestrian target collision probability; and 3) calculating the collision probabilities of the acceleration sensors;

S2, comprehensively determining whether a collision of a pedestrian outside a vehicle currently occurs through a collision recognition system based on a signal of the sensing source, the output signal including: the fused micro-collision detection state, taking the value of 0 representing there is no collision and 1 representing there is a collision; the collision probability of the fused target, taking the value range of 0-100%; and the fused micro-collision region, taking the value of 1 representing non-collision, 2 representing the front collision area, 3 representing the rear collision area, 4 representing the left collision area, and 5 representing the right collision area; and

S3, if no collision occurs, the system operating normally; when the collision is detected in a corresponding region, the system needing to adopt a respective collision response strategy and output: the fused micro-collision detection state of 1 representing there is a collision; and the fused micro-collision region being a specific collision region.

The specific contents of 1) calculating the FreeSpace point collision probability; 2) calculating the pedestrian target collision probability; 3) calculating the collision probabilities of the acceleration sensors; and the collision recognition strategy are as follows.

1. Calculate the FreeSpace point collision probability

In the present disclosure, vehicle external sensors include a front view camera, a peripheral view camera, a surround-view camera, a forward millimeter wave radar, an angular millimeter wave radar, an ultrasonic radar, a laser radar, etc., and may detect the FreeSpace point. The surround-view camera and the ultrasonic radar are necessary sensors for the implementation of the present disclosure, and presences of other sensors may make a detection result more reliable. A generation of the FreeSpace points by the sensors and a fusion process of the FreeSpace points are both the prior art, for example, CN202011306718.5, CN201810524658.0, and CN201910007212.5 are all involved, and are not within the scope of the present disclosure. The present disclosure performs calculation and determination based on the FreeSpace points after the fusion of each sensor.

Each FreeSpace point obtained by a multi-sensor information fusion has its own FSCOllision, and an attribute value of the FSCOllision will be initialized to 0 when the FreeSpace point is generated. The FSCOllision being 0 represents there is no collision risk and 1 represents there is a collision risk. At the same time, the FSCOllision of three FreeSpace points being 1 represents that there is a collision risk, and a signal is outputted: the FreeSpace point collision probability being 1 represents the high probability, and the FreeSpace point collision region is a corresponding existence region of a FreeSpace point with the collision risk. An output signal of a module calculating the FreeSpace point collision probability includes: the FSCOllision, taking the value of 0 representing there is no collision risk and 1 representing there is a collision risk; the FreeSpace point collision region, taking the value of 1 representing the non-collision, 2 representing the front collision area, 3 representing the rear collision area, 4 representing the left collision area, and 5 representing the right collision area; and the FreeSpace point collision probability, taking the value of 0 representing there is no collision and 1 representing the high probability.

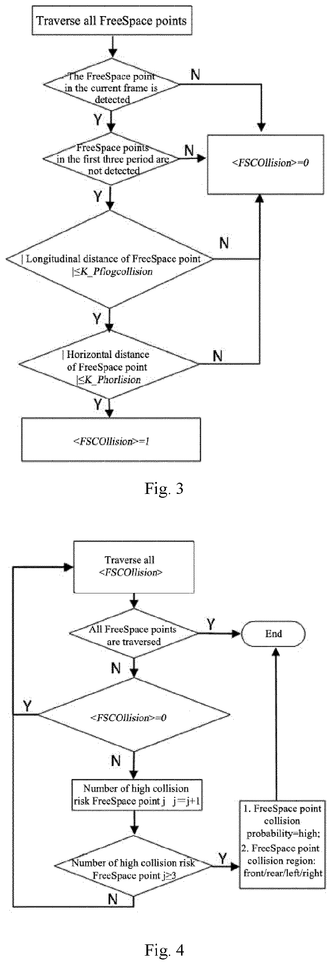

As shown in Fig. 3, a calculation flow of the FSCOllision is:

(1) traversing all the FreeSpace points obtained by the multi-sensor information fusion;

(2) determining: the FreeSpace point in the current frame is detected;

a) if not, the FSCOllision is 0;
b) if so, perform (3);

(3) determining: FreeSpace points in the first three period is not detected;

a) if not, the FSCOllision is 0;

b) if so, perform (4);

(4) determining: |a longitudinal distance of the FreeSpace point|≤ K_Pflogcollision;

a) if not, the FSCOllision is 0;

b) if so, perform (5);

(5) determining: |a horizontal distance of the FreeSpace point|≤ K_Phorlision;

a) if not, the FSCOllision is 0;

b) if so, perform (6);

(6) the FSCOllision is 1.

The FreeSpace point collision probability under the current period is calculated based on the "FSCOllision" attribute value of each FreeSpace point.

As shown in Fig. 4, a calculation flow of the FreeSpace point collision probability is:

(1) traversing FSCOllision of all FreeSpace points;

(2) determining: all FreeSpace points are traversed;

a) if so, perform (6);
b) if not, perform (3);

(3) determining: the FSCOllision is 0;

a) if so, perform (1);

b) if not, perform (4);

(4) a number of high collision risk FreeSpace point j: j = j+1;

(5) determining: the number of high collision risk FreeSpace point j≥3;

a) if so, the FreeSpace point collision probability is the high probability, and the FreeSpace point collision region is outputted based on a position of this FreeSpace point: 1 representing the non-collision, 2 representing the front collision area, 3 representing the rear collision area, 4 representing the left collision area, and 5 representing the right collision area, and perform (6);

b) if not, perform (1);

(6) end.

2. Calculate the pedestrian target collision probability

Each target obtained by the multi-sensor information fusion has its own corresponding pedestrian collision risk degree. An attribute value of the pedestrian collision risk degree will be initialized to 0 when the target is generated, with a maximum value of 10. In a calculation process, if the attribute value is greater than 10, it is set to 10, and the attribute is updated every period. A generation of the target by each sensor and a fusion process of the target are not within the scope of the present disclosure, and the present disclosure performs calculation and determination based on a target result after the fusion of each sensor.

An output signal of a module calculating the pedestrian target collision probability includes: the COllision, taking the value range of 0-10; the pedestrian target collision probability, taking the value of 0 representing there is no collision, 1 representing the medium probability, and 2 representing the high probability; the pedestrian target collision region, taking the value of 1 representing the non-collision, 2 representing the front collision area, 3 representing the rear collision area, 4 representing the left collision area, and 5 representing the right collision area.

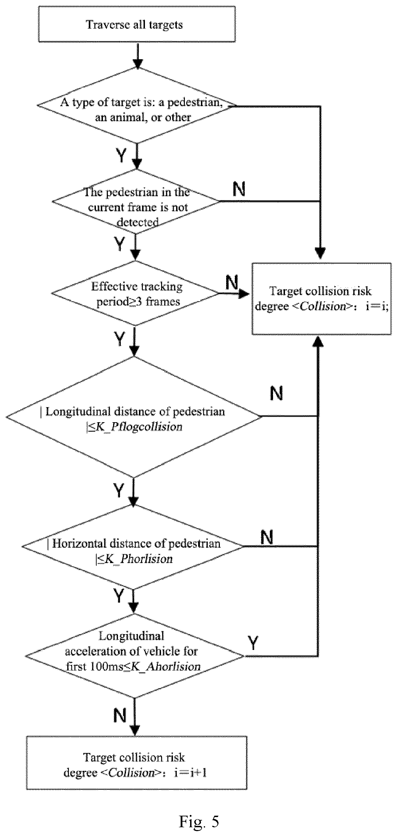

As shown in Fig. 5, a calculation flow of the Collision is:

(1) traversing all targets obtained by the multi-sensor information fusion;

(2) determining: a type of the target is: the pedestrian, the animal, or other;

a) if not, the COllision: i=i;

b) if so, perform (3);

(3) determining: the pedestrian in the current frame is not detected;

a) if not, the COllision: i=i;

b) if so, perform (4);

(4) determining: a pedestrian effective tracking period ≥ 3 frames;

a) if not, the COllision: i=i;

b) if so, perform (5);

(5) determining: |a longitudinal distance of the pedestrian| ≤ K_Pflogcollision;

a) if not, the COllision: i=i;
b) if so, perform (6);

(6) determining: |a horizontal distance of the pedestrian| ≤ K_Phorlision;

a) if not, the COllision: i=i;

b) if so, perform (7);

(7) determining: a longitudinal acceleration of the vehicle for the first 100 ms ≤ K_Ahorlision;

a) if so, the COllision: i=i;

b) if not, perform (8);

(8) the COllision: i = i+1.

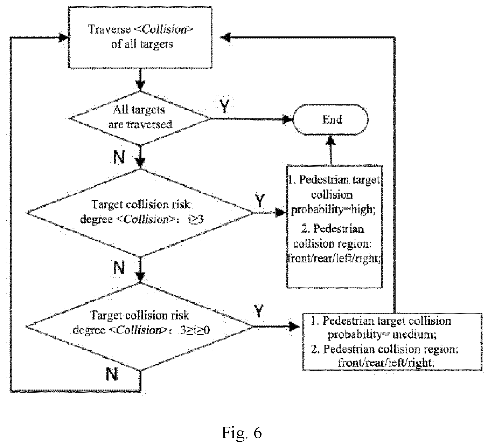

The pedestrian target collision probability in the current period is calculated based on the Collision of each target. As shown in Fig. 6, a calculation flow of the pedestrian target collision probability is:

(1) traversing Collision of all targets;

(2) determining: all targets are traversed;

a) if so, perform (5);

b) if not, perform (3);

(3) determining: the COllision: i≥3;

a) If so, the Collision is the high probability, and the pedestrian target collision region is outputted based on a position of the pedestrian: 1 representing the non-collision, 2 representing the front collision area, 3 representing the rear collision area, 4 representing the left collision area, and 5 representing the right collision area, and perform (5);

b) if not, perform (4);

(4) determining: the COllision: 3≥i≥0;

a) If so, the Collision is the medium probability, and the pedestrian target collision region is outputted based on the position of the pedestrian: 1 representing the non-collision, 2 representing the front collision area, 3 representing the rear collision area, 4 representing the left collision area, and 5 representing the right collision area, and perform (5);

b) if not, perform (1);

(5) end.

3. Calculate the collision probabilities of the acceleration sensors

The vehicle is provided with three acceleration sensors, and a collision of a single acceleration sensor needs to be calibrated experimentally based on an installation vehicle type of the sensor. According to the installation vehicle type of the sensor, the following calibration results are proposed through experimental calibration in an early stage: when a collision waveform peak acceleration value of the single acceleration sensor is less than 2 g, the collision probability of the sensor is considered to be the low probability; when the collision waveform peak acceleration value of the single acceleration sensor is greater than 2 g and less than 5 g, the collision probability of the acceleration sensor is considered to be the medium probability; and when the collision waveform peak acceleration value of the single acceleration sensor is greater than 5 g, the collision probability of the sensor is considered to be a high probability.

An output signal of a module calculating the collision probabilities of the acceleration sensors includes: the collision probabilities of the acceleration sensors, taking the value of 1 representing the low probability, 2 representing the medium probability, and 3 representing the high probability.

As shown in table 3, based on values of the three acceleration sensors, there is a determination that collision detection probabilities of the three acceleration sensors are independent of installation positions of the sensors, so there is no sequence and position difference between the three sensors in this table. The collision probabilities of the acceleration sensors represent an evaluation of a probability of a current collision from the perspective of the acceleration sensors, and its value is divided into three levels: 1 representing the low probability, 2 representing the medium probability, and 3 representing the high probability.

1) If the collision probabilities of the three acceleration sensors are all low probabilities, the collision probability is the low probability.

2) If the collision probabilities of the three acceleration sensors are all medium probabilities, the collision probability is the medium probability.

3) If the collision probabilities of the three acceleration sensors are all high probabilities, the collision probability is the high probability.

4) If the collision probabilities of the three acceleration sensors are respectively the high probability, the medium probability, and the low probability, the collision probability is the medium probability.

5) If the collision probabilities of two acceleration sensors are the low probabilities and the collision probability of the other is the medium probability, the collision probability is the low probability.

6) If the collision probabilities of two acceleration sensors are the low probabilities and the collision probability of the other is the high probability, the collision probability is the medium probability.

7) If the collision probabilities of two acceleration sensors are the medium probabilities and the collision probability of the other is the low probability, the collision probability is the low probability.

8) If the collision probabilities of two acceleration sensors are the medium probabilities and the collision probability of the other is the high probability, the collision probability is the medium probability.

9) If the collision probabilities of two acceleration sensors are the high probabilities and the collision probability of the other is the low probability, the collision probability is the medium probability.

10) If the collision probabilities of two acceleration sensors are high probabilities and the collision probability of the other is the medium probability, the collision probability is the high probability.

Table 3 Calculation strategy for collision probabilities of acceleration sensors

| Sequence number | Detection status of three sensors | Collision probabilities of acceleration sensors |
| --- | --- | --- |
| 1 | Low probability + Low probability + Low probability | Low probability |
| 2 | Medium probability + Medium probability + Medium probability | Medium probability |
| | | |
| 3 | High probability + High probability + High probability | High probability |
| 4 | Low probability + Medium probability + High probability | Medium probability |

(continued)

| Sequence number | Detection status of three sensors | Collision probabilities of acceleration sensors |
|---|---|---|
| 5 | Low probability + Low probability + Medium probability | Low probability |
| 6 | Low probability + Low probability + High probability | Medium probability |
| 7 | Medium probability + Medium probability + Low probability | Low probability |
| 8 | Medium probability + Medium probability + High probability | Medium probability |
| 9 | High probability + High probability + Low probability | Medium probability |
| 10 | High probability + High probability + Medium probability | High probability |

4. Collision recognition strategy

Respective weights are assigned to three signal sources according to an accuracy of a collision signal source, based on the FreeSpace point collision probability, the pedestrian target collision probability, and the collision probabilities of the acceleration sensors obtained by the above-mentioned calculation method, the weights being $K\_a$, $K\_b$, and $K\_c$ in sequence, and the weights need to be calibrated according to a real vehicle test. The weight values here are temporarily assigned a value of 0.5, 0.2, and 0.3 in sequence according to experience, and at the same time, according to detection results of the three signal sources, respective collision probabilities under the results are respectively set as shown in table 4.

An output signal of a collision recognition strategy module includes: the fused micro-collision detection state, taking the value of 0 representing there is no collision and 1 representing there is a collision; the collision probability of the fused target, taking the value range of 0-100%; and the fused micro-collision region, taking the value of 1 representing the non-collision, 2 representing the front collision area, 3 representing the rear collision area, 4 representing the left collision area, and 5 representing the right collision area.

Based on the above analysis, the collision probability of the fused target is calculated as: $C = K\_a*Ai+K\_b*Bi+K\_c*Ci$. When $C > K\_Cp$, it is determined that a collision currently occurs, and $K\_Cp$ is the collision threshold line which needs to be calibrated according to the real vehicle test, and the collision threshold line here is temporarily assigned a value of 50% according to experience. The signal is outputted: the fused micro-collision detection state of 1 representing there is a collision, and the fused micro-collision region is the collision region of the FreeSpace point.

When a signal FreeSpace point collision region is the pedestrian target collision region and is not null, the collision probability of the fused target $C = 1.2C$; where $C\leq100\%$; namely, when $C > 100\%$, $C = 100\%$ is forced.

In an embodiment, if the FreeSpace point collision probability $Ai$ at a certain moment is the high probability, the collision region of the FreeSpace point is the front collision area, the pedestrian target collision probability $Bi$ is the medium probability, the pedestrian target collision region is the front collision area, and the collision probabilities of the acceleration sensors $Ci$ is the low probability, the collision probability of the fused target is calculated as: $C = 0.5*100\%+0.2*50\%+0.3*0\% = 60\%$; since the collision region of the FreeSpace point is the pedestrian target collision region, namely, the front collision area, $C = 1.2C = 72\%$, and the collision probability of the fused target is 72 % > $K\_Cp$, the fused micro-collision detection state is determined that there is a collision.

Table 4 Collision probability of three signal sources

| Sequence number | Signal weight | Detection status of three sensors | Collision probability |
|---|---|---|---|
| FreeSpace point collision probability Ai | K_a=0.5 | No collision | 0% |
| | | High collision | 100% |

(continued)

| Sequence number | Signal weight | Detection status of three sensors | Collision probability |
|---|---|---|---|
| Pedestrian target collision probability Bi | K_b=0.2 | No collision | 0% |
| | | Medium probability | 50% |
| | | High probability | 100% |
| Collision | K_c=0.3 | Low probability | 0% |
| probabilities of acceleration sensors Ci | | Medium probability | 50% |
| | | High probability | 100% |

5. System collision response strategy

When the fused micro-collision detection state of 1 represents there is a collision, namely, it is determined that the vehicle collides with a pedestrian target outside the vehicle, the system adopts the respective collision response strategy as follows:

1) the vehicle immediately brakes and stops at a maximum deceleration;

2) the vehicle is prohibited from driving during a current ignition period;

3) a vehicle handbrake is pulled, a lock is off, a window is raised, the vehicle is stalled, and a double flash is on;

4) a user is prompted that a collision currently occurs; the user is prompted that the current collision region is: the fused micro-collision region, and the user is requested to take over;

5) a current collision at a parking lot where the vehicle is located is prompted; the current collision region at the parking end is prompted as the fused micro-collision region, and a dispatcher at the parking lot is requested to process in time; and

6) a vehicle with a V2X function needs to prompt the surrounding vehicles through the V2X: the vehicle has collided, and pay attention to safe avoidance.

In the front, rear, left, and right micro-collision scenes during the driving of the vehicle at a low speed (0-15 Km/h), for the problem that the limitation of sensor sensing, and a conventional collision sensor (the acceleration sensor) cannot accurately detect the micro-collisions in an all-round manner, without adding other sensors and hardware facilities, the present disclosure accurately recognize collisions of adults, children, pets, and the like under a low-speed condition, so that the vehicle can immediately recognize the micro-collision after the collision, and take a respective system strategy at the vehicle end to avoid secondary rolling of collided pedestrians or animals outside the vehicle, ensuring the safety of life outside the vehicle.

Finally, it should be noted that the above-mentioned embodiments are only used to illustrate the technical solution of the present invention and not to limit the technical solution, and those skilled in the art will appreciate that modifications and equivalents of the technical solution of the present disclosure, without departing from the spirit and scope of the technical solution, should be covered by the scope of the claims of the present disclosure.

**Claims**

1. A pedestrian micro-collision recognition method in a low-speed scene, comprising the steps of:

S 1, acquiring a collision signal sensing source, comprising: 1) calculating a FreeSpace point collision probability; 2) calculating a pedestrian target collision probability; and 3) calculating collision probabilities of acceleration sensors;
S2, comprehensively determining whether a collision of a pedestrian outside a vehicle currently occurs through a collision recognition system based on a signal of the sensing source; and
S3, if no collision occurs, the system operating normally; when the collision is detected in a corresponding region, the system needing to adopt a respective collision response strategy.

2. The pedestrian micro-collision recognition method in a low-speed scene according to claim 1, wherein in S1, the calculating a FreeSpace point collision probability is FreeSpace points detected based on vehicle external sensors, namely, a surround-view camera and an ultrasonic radar, and calculation and determination is performed on FreeSpace points after a fusion of each sensor;
each FreeSpace point obtained by a multi-sensor information fusion has its own corresponding FreeSpace collision risk degree (FSCOllision), and an attribute value of the FSCOllision will be initialized to 0 when the FreeSpace point is generated; the FSCOllision being 0 represents there is no collision risk, and 1 represents there is a collision risk; and at the same time, the FSCOllision of three consecutive FreeSpace points being 1 represents that there is a collision risk, and a signal is outputted: the FreeSpace point collision probability being 1 represents a high probability, and a FreeSpace point collision region is a corresponding existence region of a FreeSpace point with the collision risk.

3. The pedestrian micro-collision recognition method in a low-speed scene according to claim 1, wherein, in S1, the 2) calculating a pedestrian target collision probability comprises: each target obtained by the multi-sensor information fusion having its own corresponding pedestrian collision risk degree; an attribute value of the pedestrian collision risk degree being initialized to 0 when the target is generated, with a maximum value of 10 of the attribute value; and in a calculation process, if the attribute value is greater than 10, it being set to 10, and the attribute being updated every period.

4. The pedestrian micro-collision recognition method in a low-speed scene according to claim 1, wherein, in S 1, in the 3) calculating collision probabilities of acceleration sensors, the vehicle is provided with three acceleration sensors, and when a collision waveform peak acceleration value of a single acceleration sensor is less than 2 g, the collision probability of the sensor is considered to be a low probability; when the collision waveform peak acceleration value of the single acceleration sensor is greater than 2 g and less than 5 g, the collision probability of the acceleration sensor is considered to be a medium probability; and when the collision waveform peak acceleration value of the single acceleration sensor is greater than 5 g, the collision probability of the sensor is considered to be a high probability.

5. The pedestrian micro-collision recognition method in a low-speed scene according to claim 1, wherein in S2, an output signal, for comprehensively determining whether a collision occurs, comprises: a fused micro-collision detection state, taking a value of 0 representing there is no collision and 1 representing there is a collision; a collision probability of the fused target, taking a value range of 0-100%; and a fused micro-collision region, taking a value of 1 representing non-collision, 2 representing a front collision area, 3 representing a rear collision area, 4 representing a left collision area, and 5 representing a right collision area.

6. The pedestrian micro-collision recognition method in a low-speed scene according to claim 1, wherein in S3, the collision response strategy is outputted as the fused micro-collision detection state of 1 representing there is a collision; and the fused micro-collision region being a specific collision region.

7. The pedestrian micro-collision recognition method in a low-speed scene according to claim 2, wherein the vehicle exterior sensors further comprise a front view camera, a peripheral view camera, a forward millimeter wave radar, an angular millimeter wave radar, and a laser radar.

8. The pedestrian micro-collision recognition method in a low-speed scene according to claim 2, wherein an output signal of a module calculating the FreeSpace point collision probability comprises: the FSCOllision, taking the value of 0 representing there is no collision risk and 1 representing there is a collision risk; the FreeSpace point collision region, taking the value of 1 representing the non-collision, 2 representing the front collision area, 3 representing the rear collision area, 4 representing the left collision area, and 5 representing the right collision area; and the FreeSpace point collision probability, taking the value of 0 representing there is no collision and 1 representing the high probability.

9. The pedestrian micro-collision recognition method in a low-speed scene according to claim 3, wherein an output signal of a module calculating the pedestrian target collision probability comprises: a pedestrian target collision risk degree (COllision), taking a value range of 0-10; the pedestrian target collision probability, taking the value of 0 representing there is no collision, 1 representing the medium probability, and 2 representing the high probability; a pedestrian target collision region, taking the value of 1 representing the non-collision, 2 representing the front collision area, 3 representing the rear collision area, 4 representing the left collision area, and 5 representing the right collision area.

10. The pedestrian micro-collision recognition method in a low-speed scene according to claim 4, wherein an output signal of a module calculating the collision probabilities of the acceleration sensors comprises: the collision probabilities of the acceleration sensors, taking the value of 1 representing the low probability, 2 representing the medium probability, and 3 representing the high probability.

11. The pedestrian micro-collision recognition method in a low-speed scene according to claim 4, wherein based on values of the three acceleration sensors, there is a determination that collision detection probabilities of the three acceleration sensors are independent of installation positions of the sensors, so there is no sequence and position difference between the three sensors; the collision probabilities of the acceleration sensors represent an evaluation of a probability of a current collision from the perspective of the acceleration sensors, and taking the value of 1 representing the low probability, 2 representing the medium probability, and 3 representing the high probability;

   if the collision probabilities of the three acceleration sensors are all low probabilities, the collision probability is the low probability;
   if the collision probabilities of the three acceleration sensors are all medium probabilities, the collision probability is the medium probability;
   if the collision probabilities of the three acceleration sensors are all high probabilities, the collision probability is the high probability;
   if the collision probabilities of the three acceleration sensors are respectively the high probability, the medium probability, and the low probability, the collision probability is the medium probability;
   if the collision probabilities of two acceleration sensors are the low probabilities and the collision probability of the other is the medium probability, the collision probability is the low probability;
   if the collision probabilities of two acceleration sensors are the low probabilities and the collision probability of the other is the high probability, the collision probability is the medium probability;
   if the collision probabilities of two acceleration sensors are the medium probabilities and the collision probability of the other is the low probability, the collision probability is the low probability;
   if the collision probabilities of two acceleration sensors are the medium probabilities and the collision probability of the other is the high probability, the collision probability is the medium probability;
   if the collision probabilities of two acceleration sensors are the high probabilities and the collision probability of the other is the low probability, the collision probability is the medium probability; and
   if the collision probabilities of two acceleration sensors are high probabilities and the collision probability of the other is the medium probability, the collision probability is the high probability.

12. The pedestrian micro-collision recognition method in a low-speed scene according to claim 5, wherein a comprehensive determination method through the collision recognition system in S2 comprises: assigning respective weights to three signal sources according to an accuracy of a collision signal source based on the FreeSpace point collision probability, the pedestrian target collision probability, and the collision probabilities of the acceleration sensor obtained by the above-mentioned calculation method, the weights being K_a, K_b, and K_c in sequence and needing to be calibrated according to a real vehicle test;
   an output signal of a collision recognition strategy module comprises: the fused micro-collision detection state, taking the value of 0 representing there is no collision and 1 representing there is a collision; the collision probability of the fused target, taking the value range of 0-100%; and the fused micro-collision region, taking the value of 1 representing the non-collision, 2 representing the front collision area, 3 representing the rear collision area, 4 representing the left collision area, and 5 representing the right collision area.

13. The pedestrian micro-collision recognition method in a low-speed scene according to claim 12, wherein the collision probability of the fused target is calculated as:

$$C = K\_a * Ai + K\_b * Bi + K\_c * Ci;$$

   wherein when C > K_Cp, it is determined that a collision currently occurs, and K_Cp is a collision threshold line which needs to be calibrated according to the real vehicle test, and the collision threshold line is temporarily assigned a value of 50% according to experience; the signal is outputted: the fused micro-collision detection state being 1 represents there is a collision, and the fused micro-collision region is the collision region of the FreeSpace point.

**14.** The pedestrian micro-collision recognition method in a low-speed scene according to claim 12 or 13, wherein when a signal FreeSpace point collision region is the pedestrian target collision region and is not null, the collision probability of the fused target C = 1.2C; wherein C≤100%; namely, when C > 100%, C = 100% is forced.

**15.** The pedestrian micro-collision recognition method in a low-speed scene according to claim 6, wherein the system collision response strategy in S3 is that when the fused micro-collision detection state of 1 represents there is a collision, namely, it is determined that the vehicle collides with a pedestrian target outside the vehicle, the system adopts the respective collision response strategy as follows:

   1) the vehicle immediately brakes and stops at a maximum deceleration;
   2) the vehicle is prohibited from driving during a current ignition period;
   3) a vehicle handbrake is pulled, a lock is off, a window is raised, the vehicle is stalled, and a double flash is on;
   4) a user is prompted that a collision currently occurs; the user is prompted that the current collision region is: the fused micro-collision region, and the user is requested to take over;
   5) a current collision at a parking lot where the vehicle is located is prompted; the current collision region at the parking lot is prompted as the fused micro-collision region, and a dispatcher at the parking lot is requested to process in time; and
   6) a vehicle with a V2X function needs to prompt the surrounding vehicles through the V2X: the vehicle has collided, and pay attention to safe avoidance.

**16.** A pedestrian micro-collision recognition system in a low-speed scene, comprising vehicle exterior sensors, an acceleration sensor, and a processor, the processor performing the pedestrian micro-collision recognition method in a low-speed scene according to any one of claims 1 to 15.

Fig. 1

Fig. 2

Fig. 3

Fig. 4

Fig. 5

Fig. 6

## INTERNATIONAL SEARCH REPORT

| | International application No. |
|---|---|
| | **PCT/CN2023/072689** |

| A. | CLASSIFICATION OF SUBJECT MATTER |
|---|---|
| | B60W30/095(2012.01)i;G08G1/00(2006.01)i |

According to International Patent Classification (IPC) or to both national classification and IPC

| B. | FIELDS SEARCHED |
|---|---|

Minimum documentation searched (classification system followed by classification symbols)

    B60W

Documentation searched other than minimum documentation to the extent that such documents are included in the fields searched

Electronic data base consulted during the international search (name of data base and, where practicable, search terms used)

    CNABS, CNTXT, ENTXT, DWPI, CNKI: 碰撞, 撞击, 概率, 行人, 路人, 风险, 识别, 判断, 检测, 加速度, collision, probability, pedestrian, risk, detect+, acceleration

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115056773 A (CHONGQING CHANG'AN AUTOMOBILE CO., LTD.) 16 September 2022 (2022-09-16)<br>    claims 1-16 | 1-16 |
| X | JP 2018045426 A (ISUZU MOTORS LTD.) 22 March 2018 (2018-03-22)<br>    description, paragraphs 10-13 | 1, 6, 16 |
| X | CN 108263279 A (HYUNDAI MOTOR COMPANY et al.) 10 July 2018 (2018-07-10)<br>    description, paragraphs 184-191 | 1, 6, 16 |
| A | US 2008136613 A1 (DENSO CORP.) 12 June 2008 (2008-06-12)<br>    entire document | 1-16 |
| A | CN 114454876 A (SUOTUO (HANGZHOU) AUTOMOBILE INTELLIGENT EQUIPMENT CO., LTD.) 10 May 2022 (2022-05-10)<br>    entire document | 1-16 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 May 2023** | **19 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072689**

| Patent document cited in search report | | | Publication date (day/month/year) | Patent family member(s) | | | Publication date (day/month/year) |
|---|---|---|---|---|---|---|---|
| CN | 115056773 | A | 16 September 2022 | None | | | |
| JP | 2018045426 | A | 22 March 2018 | None | | | |
| CN | 108263279 | A | 10 July 2018 | EP | 3342661 | A1 | 04 July 2018 |
| | | | | KR | 20180078983 | A | 10 July 2018 |
| | | | | KR | 101996418 | B1 | 04 July 2019 |
| | | | | US | 2021031737 | A1 | 04 February 2021 |
| | | | | US | 11584340 | B2 | 21 February 2023 |
| | | | | US | 2018236985 | A1 | 23 August 2018 |
| | | | | US | 10814840 | B2 | 27 October 2020 |
| US | 2008136613 | A1 | 12 June 2008 | US | 7737833 | B2 | 15 June 2010 |
| | | | | JP | 2008143372 | A | 26 June 2008 |
| | | | | JP | 5077639 | B2 | 21 November 2012 |
| | | | | DE | 102007057727 | A1 | 19 June 2008 |
| | | | | DE | 102007057727 | B4 | 09 April 2009 |
| CN | 114454876 | A | 10 May 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201580007859
- CN 201822036612
- CN 202010344141

- CN 202011306718
- CN 201810524658
- CN 201910007212